# EUROPEAN PATENT SPECIFICATION

(11) **EP 4 416 076 B1**
(45) Date of publication and mention of the grant of the patent: **02.07.2025**
(21) Application number: 22765921.6
(22) Date of filing: 22.08.2022
(51) Int. Cl.: B65D 81/20, B65D 81/24, B65D 85/34, B65D 85/50, A23B 7/148, B65B 25/04, B65B 61/02

(54) **PACKAGE FOR PRESERVING RESPIRING PRODUCE AND METHOD**
VERPACKUNG ZUR KONSERVIERUNG ATMENDER PRODUKTE UND VERFAHREN
EMBALLAGE POUR LA CONSERVATION DE PRODUITS RESPIRANTS ET PROCÉDÉ

(30) Priority: 15.10.2021 NL 2029437
(43) Date of publication of application: 21.08.2024
(73) Proprietor: Perfo Knowledgy B.V., 3449 JB Woerden (NL)
(72) Inventor: GROENEWEG, Bastiaan Rinke Antony, 3449 JB Woerden (NL)
(74) Representative: De Vries & Metman
(86) International application number: PCT/EP2022/073360
(87) International publication number: WO 2023/061645

(56) References cited:
- EP-A1- 2 294 923
- WO-A1-2020/251358
- WO-A1-97/22470
- US-B1- 6 441 340
- ANONYMOUS: "BOPE Takes Aim at BOPP & BOPET Films | Plastics Technology", 7 March 2020 (2020-03-07), XP055937054, Retrieved from the Internet <URL:https://www.ptonline.com/blog/post/bope-takes-aim-at-bopp-bopet-films-> [retrieved on 20220630]

## Description

### TECHNICAL FIELD

The present disclosure relates to a package for preserving respiring produce contained in the package, in particular vegetables, fruit, flowers and herbs, comprising a packaging material, in particular a polymer film, provided with one or more perforations enabling gas exchange, in particular the exchange of oxygen and carbon dioxide, with the outside atmosphere surrounding the package. The invention further relates to a method for manufacturing such a package.

### BACKGROUND

Shelf life of natural products is of interest to producers, sellers, re-sellers and consumers alike. In the case of food stuffs, like vegetables, fruit, herbs and/or spices, taste, flavour, ripeness and/or structural properties (e.g. firmness) are particularly relevant, as well as inhibiting decay processes and/or growth of pathogens. In the case of flowers, particular concern is the so-called vase life, the time cut flowers and/or flowers in a bouquet retain acceptably pleasing appearance and/or fragrance on display. Typically, the vase life is a few days up to about two weeks at most. Shelf life and vase life are affected by initial produce quality and by conditions of storage and/or transport.

Natural produce such as flowers, vegetables, fruits and/or herbs tend to respire after being harvested, involving inter alia to a consumption of oxygen and a generation of carbon dioxide. The respiration continues for prolonged periods, in particular if the produce has undergone little to no processing, e.g. having been washed and possibly peeled and/or chopped up, but otherwise fresh and uncooked. When such produce is packaged, the atmosphere within the package is affected by the respiring produce. Conversely, an atmosphere surrounding natural produce affects the respiration, maturation, aging and/or deterioration of the packed produce. It has therefore become customary to package fresh produce in packages with a modified atmosphere (Modified Atmosphere Package or MAP) or with a controlled atmosphere (Controlled Atmosphere Package or CAP). In MAP the produce is packaged, and an artificial gas mixture is used to establish a distinct interior atmosphere in the package, which may however change later on due to the respiration of the packed produce. In CAP the produce is packaged, and the composition of the package atmosphere is controlled by including an active absorber for an atmosphere component, e.g. an oxygen scavenger and/or by adapting transmission of the packaging material to allow exchange with an exterior atmosphere outside the package, e.g. by perforating the material. Modified- and controlled atmosphere packaging (MAP/CAP) preserve produce quality by reducing the aerobic respiration rate while avoiding anaerobic processes that may lead to adverse changes, e.g. in one or more of colour, texture, flavour and aroma.

Another aspect of fresh and/or respiring produce is, on the one hand, the production of water vapour by the produce and, on the other hand, sensitivity to humidity by the produce and/or live contaminants (e.g. microbes, insects, parasites, and fungi). Therefore, humidity of the atmosphere inside a package should also preferably be controlled.

In view of the above, different packages and packaging materials have been developed, e.g. see WO 2016/071922 or WO 2016/003899. It is further noted that various aspects of modified /controlled atmosphere packaging are disclosed in US 7,083,837 and in P.V. Mahajan et al., "An interactive design of MA-packaging for fresh produce", in: "Handbook of food science, technology and engineering", Y.H. Hui (ed), CRC Press (Taylor & Francis Group) 2006.

Additional aspects related to packaging materials and/or packaging of respiring produce are disclosed in EP 2 294 923, US 2010/221393, WO 2017/220801, US 2010/151166, WO 2018/147736, WO 2009/003675, DE 699 01 477, and in M. Mastromatteo, et al. "A new approach to predict the mass transport properties of micro-perforated films intended for food packaging applications", J. Food. Eng. 113 (1):41-46 (2012-05-18), DOI: 10.1016/J.JFOODENG.2012.05.029; and M. Scetar, et al, "Trends in Fruit and Vegetable Packaging - a Review", Croatian J. Food Tech., Biotech. Nutr., 5(3-4):69-86 (2010), ISSN: 1847-3423.

US 6 376 032 describes gas-permeable membranes which are useful in the packaging of fresh cut fruit and vegetables, and other respiring biological materials. The membranes are made by forming thin polymeric coatings on microporous polymeric films. Preferred coating polymers are side chain crystalline polymers such as polyacrylates and are applied onto the microporous film by solution coating.

US 6 441 340 describes microperforated packaging materials for use in modifying or controlling the flow of oxygen and carbon dioxide into and/out of a fresh produce container, where the microperforations are specifically tailored in size, location and number for the specific produce. A packaging system of designating specifically tailored microperforated containers for particular fresh produce to optimally preserve the produce. A method of making the registered microperforations on the packaging material using a CO₂ laser and a sensor mechanism.

US 2015/321823 is based on synergistic effect of a cyclopropene compound and a modified atmosphere package to extend shelflife and/or storage for avocados. Provided is a method of storing avocados comprising the step of exposing avocados to an atmosphere that contains a cyclopropene compound, wherein either (a) the avocados are in a modified atmosphere package during exposure to the cyclopropane compound, or (b) the avocados are placed into a modified atmosphere package after exposure to the cyclopropene compound, and the avocados remain in the modified atmosphere package for at least two hours. In some embodiments, the modified-atmosphere package is constructed so that the transmission rate of oxygen for the entire package is from 200 to 40,000 cubic centimeters per day per kilogram of avocados.

However, in view of the ongoing strive to improve produce quality and to prevent spoilage and loss, further improvements are still desired. This is especially the case for packages for freshly cut leafy greens. This type of produce is especially prone to decay and spoilage. Therefore, packages for these types of produce still leave much to be desired especially with respect to transparency and shelf-life.

### SUMMARY

Herewith a package for preserving respiring produce and a method of manufacturing a package for preserving respiring produce contained in the package are provided and specified in the appended claims.

A package for preserving respiring produce contained in the package wherein the package defines a package volume for containing a portion of the produce and a package atmosphere, which comprises:
- a packaging material which comprises a Biaxially Oriented Poly Ethylene (BOPE) or a Mono Directed Oriented poly Ethylene (MDOPE)- containing polymer film with a haze of at most 10, preferable at most 5, more preferably at most 3, and most preferably at most 2, as determined by ASTM D 1003
- said polymer film being provided with one or more perforations enabling gas exchange with the atmosphere surrounding the package to form the package into a Controlled Atmosphere Package (CAP); wherein:
- the packaging material has a material carbon dioxide transmission rate (CO₂TRₘₐₜ) and,
- the one or more perforations provide a perforation carbon dioxide transmission rate (CO₂TR_{perf}), such that the package carbon dioxide transmission rate (CO₂TR_{pack}) is the sum of the perforation carbon dioxide transmission rate (CO₂TR_{perf}) and the material carbon dioxide transmission rate (CO₂TRₘₐₜ) of the packaging material (CO₂TR_{pack} = CO₂TR_{perf} + CO₂TRₘₐₜ), and wherein
- the CO₂TR_{pack} is at least 1000 ml/24 hrs per 100 gram produce to be packed, preferably at least 1500 ml/24 hrs, more preferably at least 2000 ml/24 hrs, most preferred at least 2500 ml/24 hrs.

The package of the present disclosure may suitably be used suitable for any respiring produce such as freshly cut leafy greens, freshly cut vegetables, fruit, herbs, flowers or prepared salads.

The freshly cut leafy greens may comprise lettuce, arugola, spinach, romaine, and combinations hereof.

The freshly cut vegetables may comprise beans, zucchini, carrots, sprouts, leaks, cauliflower, broccoli, and combinations thereof.

The fresh fruit may comprise berries, apples, stone-fruit such as mango, pears, tomatoes, peppers, bananas, grapes, etcetera, and combinations thereof.

The prepared salad may comprise freshy-cut leafy greens and/or freshly cut vegetables, and/or fresh fruit.

The thickness of the polymer film layer is in the range of 5-200 micrometers, preferably in a range of 10-150 micrometers, more preferably in a range of 15-100 micrometres, even more preferable in a range of 20-75 micrometers, most preferably in a range of 15-50 micrometers.

The packaging material has material oxygen transmission rate and a perforation oxygen transmission rate (O₂TR_{perf}). The package oxygen transmission rate (O₂TR_{pack}) is the sum of the perforation oxygen transmission rate (O₂TR_{perf}) and the material oxygen transmission rate (O₂TRₘₐₜ) of the packaging material (O₂TR_{pack} = O₂TR_{perf} + O₂TRₘₐₜ). The package transmission ratio β_{pack} is β_{pack} = (CO₂TR_{perf} + CO₂TRₘₐₜ) / (O₂TR_{perf} + O₂TRₘₐₜ). The package transmission ratio β_{pack} = CO₂TR_{pack} / O₂TR_{pack} may be set to at least 1,5, preferably at least 2, more preferably at least 3, still more preferably at least 4, such as 5 or more.

The packaging material may have an oxygen transmission rate (O₂TRₘₐₜ) of at least 2000 ml/ (m².24 hrs), preferably at least 3000 ml/(m².24 hrs), more preferably at least 4000 ml/(m².24 hrs), most preferably at least 5000 ml/(m².24 hrs).

The packaging material may have a carbon dioxide transmission rate (CO₂TRₘₐₜ) of at least 15000 ml/(m².24 hrs), preferably at least 20000 ml/(m².24 hrs), more preferably at least 25000 most preferably at least 30000 ml/(m².24 hrs).

A package according to the disclosure may also be in the form of a tray and a lidding film sealed to the tray thus closing the package. In that case the lidding film is a Biaxially Oriented Poly Ethylene (BOPE) or a Mono Directed Oriented poly Ethylene (MDOPE)- containing polymer film polymer film.

The disclosure is further directed to a method for manufacturing a package for preserving respiring produce contained in the package comprising:
i. providing a closed package defining a package volume for containing in the package volume a portion of the respiring produce from a packaging material comprising a Biaxially Oriented Poly Ethylene (BOPE) or a Mono Directed Oriented poly Ethylene (MDOPE)- containing polymer film with a haze of at most 10, prefably at most 5, more preferably at most 3, and most preferably at most 2, as determined by ASTM D 1003; and
ii. determining a size, and possibly a number of one or more perforations (3) provided in or to be provided in the packaging material to enable gas exchange between the package atmosphere and the atmosphere surrounding the package to form the package into a Controlled Atmosphere Package (CAP),such that the package has a package carbon dioxide transmission rate (CO₂TR_{pack}) which is at least 1000 ml/24 hrs per 100 gram produce to be packed, preferably at least 1500 ml/24 hrs, more preferably at least 2000 ml/24hrs, most preferred at least 2500 ml/24 hrs.

Suitable packaging material for the method may have an oxygen transmission rate (O₂TR) of at least 2000 ml/(m².24 hrs), preferably at least 3000 ml/(m².24 hrs), more preferably at least 4000 ml/(m².24 hrs), most preferably at least 5000 ml/(m².24 hrs).

The carbon dioxide transmission rate (CO₂TR) of the suitable packaging material for the method may have at least 10000 ml/(m².24 hrs), preferably at least 12000 ml/(m².24 hrs), more preferably at least 15000 most preferably at least 20000 ml/(m².24 hrs).

The method of manufacturing a package for package for preserving respiring produce contained in the package may also be directed to the production of a tray with a lidding film sealed to the tray thus closing the package wherein the lidding film is a Biaxially Oriented Poly Ethylene (BOPE) or a Mono Directed Oriented Poly Ethylene (MDOPE)- containing polymer film polymer film.

### DETAILED DESCRIPTION

The present disclosure provides a package for preserving respiring produce and a method of manufacturing a package for preserving respiring produce contained in the package are provided and specified in the appended claims.

More specifically, the disclosure is directed to a package for preserving respiring produce contained in the package wherein the package defines a package volume for containing a portion of the produce and a package atmosphere, which comprises:
- a packaging material which comprises a Biaxially Oriented Poly Ethylene (BOPE) or a Mono Directed Oriented poly Ethylene (MDOPE)-containing polymer film with a haze of at most 10, preferable at most 5, more preferably at most 3, and most preferably at most 2, as determined by ASTM D 1003
- said polymer film being provided with one or more perforations enabling gas exchange with the atmosphere surrounding the package to form the package into a Controlled Atmosphere Package (CAP); wherein:
- the packaging material has a material carbon dioxide transmission rate (CO₂TRₘₐₜ) and,
- wherein the one or more perforations provide a perforation carbon dioxide transmission rate (CO₂TR_{perf}) and a perforation oxygen transmission rate (O₂TR_{perf}), such that the package carbon dioxide transmission rate (CO₂TR_{pack}) is the sum of the perforation carbon dioxide transmission rate (CO₂TR_{perf}) and the material carbon dioxide transmission rate (CO₂TRₘₐₜ) of the packaging material (CO₂TR_{pack} = CO₂TR_{perf} + CO₂TRₘₐₜ), and wherein
- the CO₂TR_{pack} is at least 1000 ml/24 hrs per 100 gram produce to be packed, preferably at least 1500 ml/24 hrs, more preferably at least 2000 ml/24 hrs, most preferred at least 2500 ml/24 hrs.

The packaging material used is a Biaxially Oriented Poly Ethylene (BOPE) or Mono Directed Oriented Poly ethylene (MDOPE) -containing polymer film. When polyethylene film is extruded and stretched in both the machine direction and across machine direction, it is called *biaxially oriented polyethylene.* When extruded polyethylene film is only stretched on one direction it is called mono directed oriented polyethylene. BOPE film and MDOPE film may be multi-layered.

For instance, the BOPE or MDOPE-containing film may also comprise a printable layer and/or a heat sealable layer on a polyethylene core layer. The various layers may optionally be provided with intermediate layers to provide the necessary compatibility between the layers. Preferably the various layers are polyethylene layers. BOPE film and MDOPE film have a higher tensile strength and impact strength than conventional polyethylene film BOPE-film. Further BOPE and MDOPE may be produced with a high transparency. Since the package according to the disclosure is used for preserving produce, transparency of the packing material is important. The customer wishes to ensure himself of the quality and freshness of the produce. BOPE and MDOPE-containing polymer films with a haze of at most 10, preferably at most 5, more preferably at most 3, and most preferably at most 2, as determined by ASTM D 1003 are suitable for the present package. Owing to their higher mechanical strengths, BOPE and MDOPE-containing polymer films may be prepared with a reduced thickness, resulting in a reduced plastic use, and thus reduced costs and a reduced waste. Furthermore, BOPE and MDOPE are 100% recyclable. We have found that this type of material is especially suitable for creating microperforations in a reproducible way with very homogeneous perforations. We have also found that BOPE and MDOPE have a strongly increased CO₂ permeability and β ratio, as well as a higher water vapour transmission rate compared to conventional polyethylene. These properties make the material highly suitable for use in the package according to the disclosure. It even makes it possible to adjust the package to the specific produce to be packed.

Biaxially oriented polyethylene (BOPE) films are known in the art. For instance WO 97/22470 describes BOPE films and its production process. In the examples several films are prepared and oriented. The disclosed resulting properties of the films comprises the Oxygen transmission rate and the water vapour transmission rate. The document is silent on the CO₂transmission rate of the films.

It is known that different species of produce and different varieties within a produce species exhibit different respiration rates, documented in literature. The total open area of the perforations for CAP should be determined based on the produce (to be) packed and the transmission properties of the packaging material itself; the transmission rate of the package for each substance is formed by the combination of the transmission rate of the packaging material and the transmission rate through the perforations for the respective substance.

The package of the present disclosure may suitably be used suitable for any respiring produce such as freshly cut leafy greens, freshly cut vegetables, fruit, herbs, flowers or prepared salads. As mentioned above the BOPE or MDOPE-containing polymer film enables the adjustment to the package of any respiring produce. We have found that this can be done by setting the carbon dioxide transmission rate of the package to at least 1000 ml/24 hrs per 100 gram produce to be packed. The impact of carbon dioxide when it reaches a harmful level on for instance leafy greens such as spinach is much higher than for instance dense vegetables such as green beans or brussels sprouts, because the surface area of spinach per weight is much higher than for green beans. Thus with the present disclosure packages are provided that are suitable both for high demanding produce such as leafy greens, but also for more dense produce such as green beans or brussels sprouts. The parameter of CO₂TR of the package per 100 grams of produce takes into account the differences in density of the produce. In the literature this parameter was not disclosed and its relevance was not recognised.

Examples of freshly cut leafy greens are lettuce, arugola, spinach, romaine, and combinations hereof.

For these freshly cut leafy greens a CO₂TR of the package per 100 grams preferably is 1500 ml/24 hrs, more preferably 2000 ml/24 hrs, most preferred 2500 ml/24 hrs.

Examples of freshly cut vegetables are beans, zucchini, carrots, sprouts, leaks, cauliflower, broccoli, etcetera, and combinations thereof.

Examples of fresh fruit are berries, apples, pears, tomatoes, peppers, bananas, mango, grapes, stone fruit such as mango, grapes, etcetera, and combinations thereof.

The package according to the disclosure may also suitable be used for prepared salads. These may comprise freshy-cut leafy greens and/or freshly cut vegetables, and/or fresh fruit.

As mentioned above, BOPE and MDOPE can be prepared with smaller thickness than conventional polyethylene, because of its higher mechanical strength. In addition to the recyclability of these types of films, these reduced thicknesses have advantages with respect to costs and environmental impact.

The thickness of the polymer film layer is in the range of 5-200 micrometers, preferably in a range of 10-150 micrometers, more preferably in a range of 15-100 micrometers, even more preferable in a range of 20-75 micrometers, most preferable in a range of 15-50 micrometers.

The packaging material has a carbon dioxide transmission rate CO₂TRₘₐₜ and an oxygen transmission rate O₂TR. The package has a package carbon dioxide transmission rate CO₂TR_{pack} and an oxygen transmission rate O₂TR_{pack} and a package transmission ratio β_{pack} = CO₂TR_{pack} / O₂TR_{pack} of at least 1,5, preferably at least 2, more preferably at least 3, still more preferably at least 4, e.g. 5 or more.

Thus the package as a whole provides a high transmission ratio between the transmission rates for oxygen and carbon dioxide.

The carbon dioxide transmission rate facilitates escape of carbon dioxide and thus reduces elevating CO₂ concentration in the package atmosphere, thus reducing or preventing risks of anaerobic decay processes. Further, CO₂ may dissolve in water, from which it may re-enter the package atmosphere later on, and with which it may react to form carbonic acid which in turn may affect taste and/or composition of food produce stored in the package.

When the package is closed comprising respiring produce, the oxygen in the package atmosphere is consumed and the oxygen concentration decreases.

A too-low O₂-concentration may accelerate anaerobic decay processes; however, a too high concentration causes accelerated aging of the produce. Both should be prevented. The oxygen transmission rate O₂TR of the package enables an inflow of oxygen into the package atmosphere, preventing complete consumption of the oxygen.

An oxygen concentration in a range of typically 1-10%, preferably 2-8% e.g. 3-7% more preferably 4-6% may be preferred to decelerate aging processes (also known as "putting the produce to sleep") and maximise shelf life. Such concentrations may be achieved by the one or more perforations forming the package as a CAP. By the one or more perforations the oxygen transmission rate of the package as a whole can be increased.

Each perforation affects the transmission rate of the package as a whole for oxygen and carbon dioxide. The package transmission ratio β_{pack} facilitates control over the oxygen concentration and the carbon dioxide concentration in the package atmosphere by perforating the material with the one or more perforations. Thus increased inflow of oxygen and increased outflow of carbon dioxide may be balanced by the perforation(s).

The one or more perforations may be provided as one or more microperforations. The package when formed into the CAP should be devoid of other openings than provided by the one or more perforations for accurate control of the package atmosphere.

It is noted that the water vapour transmission rate of the package is only insignificantly affected by the open area of microperforations for CAP.

In an embodiment, the one or more perforations may comprise microperforations having an open area of below 1 square millimetre, preferably below 0.5 square millimetre, e.g. about 0.25 square millimetre or less. Such microperforations facilitate exchange of gases through the packaging material, but hinder contamination of the packed material from outside sources. Such microperforations may be made by (hot) needles. Laser perforation is an effective manner to provide such microperforations fast, reliable, food-safe, and in desired locations. Microperforations also tend not to significantly compromise integrity of the packaging material, in particular if the perforated packaging material comprises a polymeric film. Suitable films may range from a flexible films that can be bent and/or folded multiple times without harm to a rigid film for making a tray.

Laser drilled microperforations may be approximately round or oblong, having a (largest) diameter in a range of 50 - 500 micrometres, in particular in a range of 60 - 400 micrometres, preferably in a range of 70 - 200 micrometres, more preferably in a range of 80 - 150 micrometres such as in a range of 90 - 120 micrometres.

Determining an oxygen transmission rate and/or a carbon dioxide transmission rate provided by a perforation may comprise determining an open area and a film thickness. In case of a generally round, elliptical of oval perforation the open area may be determined by determining on the basis of one or more diameters determined from the hole, for which camera images may be used. A suitable calculation model is provided in Fishman et al, "Mathematical model for perforation effect on oxygen and water vapor dynamics in modified atmosphere packages", J. Food Sci. 61(5):956-961 (1996).

With properly setting the carbon dioxide transmission rate and the oxygen transmission rate of the package, i.e. the β, by choosing the proper packaging material and adding microperforations a CAP can be established. Thus, the one or more perforations perforation provides a perforation carbon dioxide transmission rate CO₂TR_{perf} and a perforation oxygen transmission rate O₂TR_{perf}, such that the package carbon dioxide transmission rate CO₂TR_{pack} is the sum of the perforation carbon dioxide transmission rate CO₂TR_{perf} and the carbon dioxide transmission rate CO₂TR of the packaging material: CO₂TR_{pack} = CO₂TR_{perf} + CO₂TRₘₐₜ; and the package oxygen transmission rate O₂TR_{pack} is the sum of the perforation oxygen transmission rate O₂TR_{perf} and the oxygen transmission rate O₂TR of the packaging material: O₂TR_{pack} = O₂TR_{perf} + O₂TRₘₐₜ. The package transmission ratio β_{pack} then is β_{pack} = (CO₂TR_{perf} + CO₂TRₘₐₜ) / (O₂TR_{perf} + O₂TRₘₐₜ). As described above, the package according to the disclosure has β_{pack} of at least 1,5, preferably at least 2, more preferably at least 3, still more preferably at least 4, such as 5 or more.

The packaging material may have an oxygen transmission rate (O₂TRₘₐₜ) of at least 2000 ml/(m².24 hrs), preferably at least 3000 ml/(m².24 hrs), more preferably at least 4000 ml/(m².24 hrs), most preferably at least 5000 ml/(m².24 hrs). The oxygen transmission rate is measured in accordance with ASTM D3985 2556 (coulometric method) at a test temperature of 23 °C.

The packaging material may have a carbon dioxide transmission rate (CO₂TRₘₐₜ) of at least 15000 ml/(m².24 hrs), preferably at least 20000 ml/(m².24 hrs), more preferably at least 25000 most preferably at least 30000 ml/(m².24 hrs). The carbon dioxide transmission rate is measured in accordance with ISO 2556 (manometric method) at a test temperature of 23 °C.

A package according to the disclosure may also be in the form of a tray and a lidding film sealed to the tray thus closing the package. In that case the lidding film is a Biaxially Oriented Poly Ethylene (BOPE) or a Mono Directed Oriented poly Ethylene (MDOPE)- containing polymer film polymer film.

A tray package may protect the produce from mechanical harm and/or may collect juices leaking from the produce, thus it is particularly suitable for soft and/or liquid-producing produce like soft fruits, berries, grapes, and/or flowers. Tray packages comprising a barrier material may be particularly robust for such purposes.

Produce packaged in such tray packages according to the present concepts, may have extended shelf life. The lidding film may be a preferred location for the one or more perforations and it may have a particular influence in determining the transmission ratio of the package. E.g., the lidding film may have the specified carbon dioxide transmission rate and/or oxygen transmission rate of the material.

A tray formed from a sheet of material comprising one or more layers comprising polyethylene terephthalate (PET) may be strong and light weight. The material may be well recyclable reducing an environmental footprint. In such PET-tray, the material of each of the layers of the formed tray may comprise at least 50%, preferably at least 85%, more preferably at least 95% of amorphous polyethylene terephthalate, which facilitates forming the tray and providing high clarity of it.

The package may comprise a peripheral sealing rim provided with a layer of an adhesive along the circumference of the tray, preferably along the full circumference of the tray. The adhesive may facilitate sealing a lidding film of another (non-PET) material to the tray.

The disclosure is further directed to a method for manufacturing a package for preserving respiring produce contained in the package comprising:
i. providing a closed package defining a package volume for containing in the package volume a portion of the respiring produce from a packaging material comprising a Biaxially Oriented Poly Ethylene (BOPE) or a Mono Directed Oriented poly Ethylene (MDOPE)- containing polymer film with a haze of at most 10, preferably at most 5, more preferably at most 3, most preferably at most 2, as determined by ASTM D 1003; and
ii. determining a size, and possibly a number of one or more perforations (3) provided in or to be provided in the packaging material to enable gas exchange between the package atmosphere and the atmosphere surrounding the package to form the package into a Controlled Atmosphere Package (CAP),such that the package has a package carbon dioxide transmission rate (CO₂TR_{pack}) which is at least 1000 ml/24 hrs per 100 gram produce to be packed, preferably at least 1500 ml/24 hrs, more preferably at least 2000 ml/24 hrs, most preferred at least 2500 ml/24 hrs.

Suitable packaging material for the method may have an oxygen transmission rate (O₂TR) of at least 2000 ml/(m².24 hrs), preferably at least 3000 ml/(m².24 hrs), more preferably at least 4000 ml/ (m².24 hrs), most preferably at least 5000 ml/ (m².24 hrs). However, an oxygen transmission rate O₂TR of the material may preferably be less than 15000 ml/ (m².24 hrs), more preferably less than 10000 ml/(m².24 hrs), to facilitate adjustment using the one or more perforations.

The carbon dioxide transmission rate (CO₂TR) of the suitable packaging material for the method may have at least 10000 ml/(m².24 hrs), preferably at least 12000 ml/(m².24 hrs), more preferably at least 15000 most preferably at least 20000 ml/(m².24 hrs). However, a carbon dioxide transmission rate CO₂TR of the material may preferably be less than 100000 ml/(m².24 hrs), more preferably less than 75000 ml/(m².24 hrs), to facilitate adjustment using the one or more perforations.

The method of manufacturing a package for package for preserving respiring produce contained in the package may also be directed to the production of a tray with a lidding film sealed to the tray thus closing the package wherein the lidding film is a Biaxially Oriented Poly Ethylene (BOPE) or a Mono Directed Oriented Poly Ethylene (MDOPE)- containing polymer film polymer film.

The package containing respiring produce may be closed by hand with a closing device (e.g. tie, clip, tape, elastic band, etc.) and/or by folding and/or knotting. Also or alternatively, the package may be (further) closed by other techniques, e.g. by use of adhesives and/or by welding which may comprise using a hand-held device and/or an automated device which may be comprised in the apparatus. The package may be closed immediately after filling or produce may be filled in the package and the package being closed after a further treatment step and/or conditioning step, e.g. cooling.

It was found that the use of BOPE or MDOPE-containing polymer film enabled reducing the amount of oxygen in the package below that normally acceptable for CAP where higher-than-desired amounts of oxygen must be accepted to prevent unacceptably high levels of CO₂.

More importantly, such package enables extending shelf life of respiring produce in CAP packages by several days. This may amount to extending shelf life over 30-100% compared to conventional polymer films used.

In more detail, in CAP, the oxygen concentration in the package atmosphere may be lowered to a reduced oxygen concentration in order to slow down aging processes, while at the same time ensuring a minimum level of oxygen. Also or alternatively, the carbon dioxide concentration in the package atmosphere may be controlled to ensure a level below becoming harmful. Thus, aging, maturation and/or decay are slowed down and in particular anaerobic processes such as off-smell, decay cell membrane breakdown are prevented. Generally, it is preferred that the equilibrium oxygen concentration and/or carbon dioxide concentration are reached as soon as possible. For that, a combination of CAP and MAP may be used. For the MAP, the initial package atmosphere may be established at or near the time of closing the package by creating in and/or introducing into the package volume an atmosphere modification gas or -gas mixture differing from the ambient atmosphere.

For prolonged storage, most produce benefit from both a low CO₂-concentration and a low O₂-concentration in the package atmosphere, wherein the O₂-concentration is in the range of about 1-10% by volume ("%vol"), preferably in a range 3-7 %vol. In order to maintain such low O₂-concentration, the perforation(s) in the package should provide an open area configured to control inflow of oxygen into the package volume, in particular establishing a minimum inflow to prevent anaerobicity and a maximum inflow to ensure the low oxygen concentration slowing down the metabolic processes of the produce (a.k.a. "putting the produce to sleep"). This restriction to the open area of the perforation(s) inherently restricts outflow of CO₂ from the package through the perforations, considering that perforations are a-selective with respect to O₂ and CO₂: typically the ratio for the flow of CO₂:O₂ for 1 small laser perforation is approximately 1. The perforations in the package therefore determine simultaneously an upper limit for outflow of CO₂ and inflow of O₂. Manufacturing a CAP package thus forces a compromise between on the one hand raising the outflow of CO₂, which is desired, and on the other hand raising the inflow of O₂, which is undesired.

A high CO₂TR of the packaging material is therefore beneficial in establishing an improved concentration balance between O₂ and CO₂ in the package atmosphere, since this raises the transmission rate for CO₂ for the CAP package as a whole.

The package atmosphere may define an equilibrium amount of oxygen and an amount of carbon dioxide which together make up less than 20 %vol of the package atmosphere, preferably less than 17 %vol such as less than 15 %vol or even less than 13 %vol.

It has been found that as a rule-of-thumb, for present-day packaging films for fresh respiring produce, generally in CAP the amounts of O₂ and CO₂ together make up about 21-23 %vol of the package atmosphere ({amount O₂} + {amount CO₂} = ca. 21-23 %vol of the package atmosphere). In the presently provided package, the transmission ratio of the package facilitates escaping the aforementioned rule of thumb and achieving both a low concentration of O₂ and of CO₂ in the package atmosphere and a low concentration of CO₂ in the combined concentration.

Most aging processes lead to CO₂ production, causing a build-up in the package atmosphere. An elevated CO₂-concentration may accelerate anaerobic decay processes and should be prevented. However, a too high carbon dioxide transmission rate may prevent a desired deceleration of metabolic processes and associated extension of shelf life. The presently provided ranges are preferred to meet such balance.

Respiration and most aging processes lead to O₂ consumption, causing a depletion in the package atmosphere. A high O₂TR of the packaging material and/or a high carbon dioxide transmission rate CO₂TR of the packaging material facilitates fine control of oxygen influx and, respectively carbon dioxide outflow, e.g. by precisely establishing a ratio of the packaging material area and the open area of the one or more perforations to achieve the transmission ratio of the package.

The package volume may be in a range of 2-5 times the volume of the produce in the package, in some cases in a range 3-4 times the volume of the produce in the package. In some cases the package volume may be in range of 5-10 times the produce volume, e.g. 6-8 or 7 times. A larger volume ratio may be in particular used for consumer packages and/or produce that is one or more of hollow, delicate and finely divided like raspberries, cut lettuce, herbs (parsley stalks, thymian sprigs, etc). Package volume unoccupied by produce is generally called headspace.

The present disclosure is further illustrated by means of the following Examples. These Examples are merely meant for illustration and should not be construed as limitative.

### EXAMPLES

### Examples 1-13

Several sachets of a BOPE film according to the claims were provided with produce. The BOPE film was a 5-layer film with the following properties:
Thickness: 30 micrometers,
Haze: 2,5 as determined in accordance to AST D 1003
Tensile strength: MD= 80, HD= 210 as determined in accordance to AST D882
Density: 0,937 g/cm³
CO₂TR: 30.000 ml/(m².24 hrs) as determined in accordance to ISO 2556 at a test temperature of 23 °C.

The results are given in TABLE I below.

### Comparative Examples 14-26

For comparison, the days of good quality after packing is given for the same produce in the same amounts packed in sachets of similar size and volume of conventional polyethylene and BOPP for packing food products. The results are given in TABLE II.

### Examples 27-33 Quality and gas levels of packed 150 g Spinach upon storage at 6°C

150 g of spinach was packed in sachets (260 mm X 270 mm)with or without perforations and stored for 20 days at 6°C. On days 2,6,9,14,17,and day 20 the oxygen (O₂) level, the carbon dioxide (CO₂) level within the sachet and the overall quality were assessed.

When sachets of BOPE were used, the same film as in Examples 1-14 was used of thickness 40 micrometers. When sachets of BOPP were used the same material (CO₂TR of 3500ml/m2.24 hrs) as in examples 14-26 was used with a film thickness of 30 micrometers, and provided with an anti-fog coating. The film thicknesses of 40 and 30 micrometers were found to be comparable with respect to the CO₂TR and O₂TR and therefore could be used interchangeably. Also the relevance of an oxygen flush of the filled sachet (with 10% of residual O₂) was assessed. The microperforations when present were applied by a PerfoTec laser micro perforation PER 30 and all sachets were provided with the same perforation pattern. In order to calculate the optimal microperforation pattern the produces'respiration rate was determined beforehand with a Fast Respiration Meter System 4.0

The results are compiled in TABLE III.

These results show that spinach packed in BOPE with perforations and a CO₂TR per 100 g produce according to the invention provides a shelf-life of at least 20 days. The CO₂ level within these packages remained below 5% over the test period, while the O₂ level remained in the optimal range for this batch of spinach of about 10%. A CO₂ level of above 5% is considered detrimental since it affects the taste and odour of the produce. The positive result was obtained, both in packages that had been flushed with oxygen and packages without flush. In comparison with BOPP packages (shelf-life of 9 days), this is an increase of at least 222%.

The packages using BOPP however all suffered from CO₂ increase early on in the test period with CO₂ levels above 5%. Also when providing the BOPP packages with perforations, the CO₂ level increased rapidly, causing lowering of the product quality, resulting of a shelf-life of at most 9 days

### Examples 34-39 Quality and gas levels of packed 80 g lambs lettuce upon storage at 6°C

80 g of lambs lettuce was packed in sachets (260 mm X 270 mm)with or without perforations and stored for 17 days at 6°C. On days 2,6,9,14,and 17 the oxygen (O₂) level, the carbon dioxide (CO₂) level within the sachet and the overall quality were assessed. Also the relevance of an oxygen flush of the filled sachet (with 10% of residual O₂) was assessed. The BOPE and BOPP sachets had the same dimensions, perforation pattern, when present, and were of the same material as examples 27-33.

The results are compiled in TABLE IV.

These results show that lambs lettuce packed in BOPE with perforations and a CO₂TR per 100 g produce according to the invention provides a shelf-life of at least 17 days. The CO₂ level within these packages remained below 5% over the test period, while the O₂ level remained in the optimal range for this batch of lambs lettuce of about 10%. A CO₂ level of above 5% is considered detrimental since it affects the taste and odour of the produce. The positive result was obtained, both in packages that had been flushed with oxygen and packages without flush. In comparison with BOPP packages (shelf-life of 6 days), this is an increase of at least 283%.

Although the packages using BOPP fulfilled the CO₂TR per 100g produce requirement, the packages suffered from CO₂ increase above 5% after 2 days. Also when providing the BOPP packages with perforations, the CO₂ level increased to above 5% after day 9, which is an improvement compared to non-perforated BOPP packages, but still not good enough, causing yellow leaves and rot appearing on day 9. The lowering of the product quality, results in a shelf-life of at most 8 days when using BOPP.

### Examples 40-45 Quality and gas levels of packed 150 g arugola upon storage at 6°C

150 g of arugola was packed in sachets (260 mm X 270 mm)with or without perforations and stored for 17 days at 6°C. On days 2,6,9,14, and 17 the oxygen (O₂) level, the carbon dioxide (CO₂) level within the sachet and the overall quality were assessed. Also the relevance of an oxygen flush of the filled sachet (with 10% of residual O₂) was assessed. The BOPE and BOPP sachets had the same dimensions, perforation pattern when present, and were of the same material as examples 27-33.

The results are compiled in TABLE V.

These results show that arugola packed in BOPE with perforations and a CO₂TR per 100 g produce according to the invention provides a shelf-life of at least 17 days. The CO₂ level within these packages remained below 5% over the test period, while the O₂ level remained in the optimal range for this batch of arugola lettuce of about 15%. A CO₂ level of above 5% is considered detrimental since it affects the taste and odour of the produce. The positive result was obtained, both in packages that had been flushed with oxygen and packages without flush. In comparison with BOPP packages (shelf-life of 6 days), this is an increase of at least 283%.

The packages using BOPP suffered from CO₂ increase above 5% after a few days. In addition to the detrimental CO₂ level, the O₂ level could not be kept optimal and reduced to 0% over the test period. Also when providing the BOPP packages with perforations, the CO₂ level increased to above 5% after day 2, the reduction of the O2 level was less pronounced but still reduced to 0% at day 9, resulting in yellowing and rot. The lowering of the product quality, results in a shelf-life of at most 8 days when using BOPP.

**TABLE I Days of good quality after packing produce in BOPE upon storage at 6 °C**

| **Example No** | **Produce** | **CO₂TR sachet** | **CO₂TR of perforations per sachet** | **Total CO₂TR (film plus perfs) per sachet) (ml/24h)** | **Total CO₂TR per 100 gram produce** | **Days of good quality after packing** |
|---|---|---|---|---|---|---|
| 1 | Spinach 150g | 4002 | 400 | 4402 | 2935 | 14 |
| 2 | Spinach 150g | 4002 | 400 | 4402 | 2935 | 14 |
| 3 | Spinach 200g | 4368 | 600 | 4968 | 2484 | 14 |
| 4 | Spinach 300g | 4730,4 | 900 | 5630,4 | 1877 | 14 |
| 5 | Spinach 500g | 6552 | 1200 | 7752 | 1550 | 14 |
| 6 | Salad Mix 500g | 6393,6 | 500 | 6893,6 | 1379 | 12 |
| 7 | Salad Mix 570g | 6571,2 | 700 | 7271,2 | 1276 | 12 |
| 8 | Salad Mix 700g | 6903 | 900 | 7803 | 1115 | 12 |
| 9 | Salad Mix 1000g | 15019,2 | 1200 | 16219,2 | 1622 | 12 |
| 10 | Lollo Bionda 250g | 4989, 6 | 500 | 5489, 6 | 2196 | 12 |
| 11 | Lollo Bionda 2x 250g | 4972,8 | 500 | 5472, 8 | 2189 | 12 |
| 12 | Lollo Bionda 300g | 5346 | 600 | 5946 | 1982 | 12 |
| 13 | Lollo Rosso 250g | 4989,6 | 500 | 5489, 6 | 2196 | 12 |

**TABLE II Days of good quality after packing produce in conventional packing material upon storage at 6°C**

| **Ex. No** | **Product** | **Days good quality after packing with BOPP** | **Days good quality after packing with conventional PE** |
|---|---|---|---|
| 14 (comp) | Spinach 150g | 7 | 9 |
| 15 (comp) | Spinach 150g | 7 | 9 |
| 16 (comp) | Spinach 200g | 7 | 9 |
| 17 (comp) | Spinach 300g | 7 | 9 |
| 18 (comp) | Spinach 500g | 7 | 9 |
| 19 (comp) | Salad Mix 500g | 6 | 7 |
| 20 (comp) | Salad Mix 570g | 6 | 7 |
| 21 (comp) | Salad Mix 700g | 6 | 7 |
| 22 (comp) | Salad Mix 1000g | 6 | 7 |
| 23 (comp) | Lollo Bionda 250g | 6 | 8 |
| 24 (comp) | Lollo Bionda 2x 250g | 6 | 8 |
| 25 (comp) | Lollo Bionda 300g | 6 | 8 |
| 26 (comp) | Lollo Rosso 250g | 6 | 8 |

**TABLE III Quality and gas levels of 150 g packed Spinach upon storage for 20 days at 6 °C**

| **Example No.** | **Film material** | **CO₂TR_{Perforations} per sachet (ml/24h)** | **Flush (24% O₂) (Y/-)** | **Total CO₂TR per 100 g produce (ml/24h)** | **Comments** |
|---|---|---|---|---|---|
| 27 | BOPE | 468 | y | 3276 | Still on spec after day 20 |
| 28 | BOPE | 468 | - | 3276 | Still on spec after day 20 |
| 29 (comp) | BOPP | - | - | 327.6 | CO₂ level above 5% after day 2, Rotten leaves appear at day 9 |
| 30 (comp) | BOPP | 468 | y | 795.6 | CO₂ level above 5% after day 2, starts to rot at day 9 |
| 31 (comp) | BOPP | - | y | 327.6 | CO₂ level above 5% after day 2 |
| 32 (comp) | BOPP | - | y | 327.6 | CO₂ level above 5% after day 3 |
| 33 (comp) | BOPP | 468 | - | 795.6 | CO₂ level above 5% after day 2 |

**TABLE IV Quality and gas levels of 80 g packed lambs lettuce upon storage for 17 days at 6 °C**

| **Example No.** | **Film material** | **CO₂ TR_{Perforations} per sachet (ml/24h)** | **Flush (24% O₂) (Y/-)** | **Total CO₂TR per 100 g produce (ml/24h)** | **Comments** |
|---|---|---|---|---|---|
| 34 | BOPE | 468 | y | 5733 | CO₂ still below 5% after day 17 Still on spec after 17 days |
| 35 | BOPE | 468 | - | 5733 | CO₂ below 4% after day 17 Still on spec after 17 days |
| 36 (comp) | BOPP | - | - | 1750 | CO₂ level above 5% after day 3, On day 6 end of life time |
| 37 (comp) | BOPP | 468 | y | 2218 | CO₂ level above 5% after day 9, and sharp decrease O2 level |
| 38 (comp) | BOPP | - | y | 1750 | O₂ level increases from 12 to 17 % over the test period, the optimal level being 10% |
| 39 (comp) | BOPP | 468 | - | 2218 | CO₂ level above 5% after day 9 Yellow leaves and rot appear after day 9 |

**TABLE V Quality and gas levels of 150 g packed arugola upon storage for 17 days at 6 °C**

| **Example No.** | **Film material** | **CO₂ TR_{Perforations} per sachet (ml/24h)** | **Flush (24% O₂) (Y/-)** | **Total CO₂TR per 100 g produce (ml/24h)** | **Comments** |
|---|---|---|---|---|---|
| 40 | BOPE | 468 | y | 3276 | Both CO₂ and O₂ level remain between 5-7% during storage period of 17 days Still on spec after 17 days |
| 41 | BOPE | 468 | - | 3276 | CO₂ remains between 4-6% during storage period of 17 days, O₂ level decreases from 16-10% over 17 days of storage Still on spec after 17 days |
| 42 (comp) | BOPP | - | - | 327.6 | CO₂ level above 5% after day 2, O₂ level decreases to 0% at day 17 Yellowing and rotten leaves present on day 9 |
| 43 (comp) | BOPP | 468 | y | 795.6 | CO₂ level above 5% after day 2, O₂ level decreases to 0% at day 9 |
| 44 (comp) | BOPP | - | y | 327.6 | Sharp increase of CO₂ level to above 5% after day 2, Sharp decrease of O₂ level after day 2 to 0% at day 17 |

## Claims

1. A package for preserving respiring produce contained in the package wherein the package defines a package volume for containing a portion of the produce and a package atmosphere, which comprises:
- a packaging material which comprises a Biaxially Oriented Poly Ethylene (BOPE) or a Mono Directed Oriented poly Ethylene (MDOPE)-containing polymer film with a haze of at most 10, preferable at most 5, more preferably at most 3,and most preferably at most 2, as determined by ASTM D 1003,
- said polymer film being provided with one or more perforations enabling gas exchange with the atmosphere surrounding the package to form the package into a Controlled Atmosphere Package (CAP); wherein:
- the package has a package carbon dioxide transmission rate (CO₂TR_{pack})
- wherein the one or more perforations provide a perforation carbon dioxide transmission rate (CO₂TR_{perf}) such that the package carbon dioxide transmission rate (CO₂TR_{pack}) is the sum of the perforation carbon dioxide transmission rate (CO₂TR_{perf}) and the material carbon dioxide transmission rate (CO₂TRₘₐₜ) of the packaging material (CO₂TR_{pack} = CO₂TR_{perf} + CO₂TRₘₐₜ) and wherein
- the CO₂TR_{pack} is at least 1000 ml/24 hrs per 100 gram produce to be packed, preferably at least 1500 ml/24 hrs, more preferably at least 2000 ml/24 hrs, most preferred at least 2500 ml/24 hrs.

2. The package according to preceding claim 1 wherein the produce to be packed is chosen from freshly cut leafy greens, freshly cut vegetables, fruit, herbs, flowers or prepared salads.

3. The package according to any one of the preceding claims wherein the freshly cut leafy greens comprise lettuce, arugola, spinach, romaine, and combinations hereof.

4. The package according to any one of the preceding claims wherein the freshly cut vegetables comprise green beans, zucchini, carrots, sprouts, leaks, cauliflower, broccoli, and combinations thereof.

5. The package according to any one of the preceding claims wherein the fresh fruit comprises berries, apples, pears, tomatoes, peppers, bananas, stone fruit such as mangos, and combinations thereof.

6. The package according to any one of the preceding claims wherein the prepared salad comprises freshy-cut leafy greens and/or freshly cut vegetables, and/or fresh fruit.

7. The package according to any one of the preceding claims wherein the thickness of the polymer film layer is in the range of 5-200 micrometers, preferably in a range of 10-150 micrometers, more preferably in a range of 15-100 micrometres, even more preferable in a range of 20-75 micrometers, most preferable in the range of 15-50 micrometers.

8. The package according to any one of the preceding claims wherein the packaging material has a material oxygen transmission rate (O₂TR_{pack}) and a perforation oxygen transmission rate (O₂TR_{perf}), and the package oxygen transmission rate (O₂TR_{pack}) is the sum of the perforation oxygen transmission rate (O₂TR_{perf}) and the material oxygen transmission rate (O₂TRₘₐₜ) of the packaging material (O₂TR_{pack} = O₂TR_{perf} + O₂TRₘₐₜ) and the package transmission ratio β_{pack} is β_{pack} = (CO₂TR_{perf} + CO₂TRₘₐₜ) / (O₂TR_{perf} + O₂TRₘₐₜ), wherein the package transmission ratio β_{pack} = CO₂TR_{pack} / O₂TR_{pack} of at least 1,5, preferably at least 2, more preferably at least 3, still more preferably at least 4, such as 5 or more.

9. The package according to any one of the preceding claims, wherein the packaging material has an oxygen transmission rate (O₂TRₘₐₜ) of at least 2000 ml/(m².24 hrs), preferably at least 3000 ml/(m².24 hrs), more preferably at least 4000 ml/(m².24 hrs), most preferably at least 5000 ml/(m².24 hrs).

10. The package according to any one of the preceding claims, wherein the packaging material has a carbon dioxide transmission rate (CO₂TRₘₐₜ) of at least 15000 ml/(m².24 hrs), preferably at least 20000 ml/(m².24 hrs), more preferably at least 25000 most preferably at least 30000 ml/(m².24 hrs).

11. A package for preserving respiring produce contained in the package according to any one of the preceding claims wherein the packaging material comprises a tray and a lidding film sealed to the tray thus closing the package wherein the lidding film is a Biaxially Oriented Poly Ethylene (BOPE) or a Mono Directed Oriented poly Ethylene (MDOPE)- containing polymer film polymer film.

12. Method for manufacturing a package for preserving respiring produce contained in the package comprising:
i. providing a closed package defining a package volume for containing in the package volume a portion of the respiring produce from a packaging material comprising a Biaxially Oriented Poly Ethylene (BOPE) or a Mono Directed Oriented poly Ethylene (MDOPE)- containing polymer film with a haze of at most 10, preferably at most 5, more preferably at most 3, and most preferably at most 2, as determined by ASTM D 1003; and
ii. determining a size, and possibly a number of one or more perforations (3) provided in or to be provided in the packaging material to enable gas exchange between the package atmosphere and the atmosphere surrounding the package to form the package into a Controlled Atmosphere Package (CAP),such that the package has a package carbon dioxide transmission rate (CO₂TR_{pack}) which is at least 1000 ml/24 hrs per 100 gram produce to be packed, preferably at least 1500 ml/24 hrs, more preferably at least 2000 ml/24 hrs, most preferred at least 2500 ml/24 hrs.

13. Method according to claim 12, wherein the packaging material has a carbon dioxide transmission rate (CO₂TR) of at least 10000 ml/(m².24 hrs), preferably at least 12000 ml/(m².24 hrs), more preferably at least 15000 most preferably at least 20000 ml/(m².24 hrs).

14. Method according to any one of preceding claims 12-13, wherein the packaging material has an oxygen transmission rate (O₂TR) of at least 2000 ml/(m².24 hrs), preferably at least 3000 ml/(m².24 hrs), more preferably at least 4000 ml/(m².24 hrs), most preferably at least 5000 ml/(m².24 hrs)

15. Method of manufacturing a package for package for preserving respiring produce contained in the package according to any one of the preceding claims 12-14 wherein the packaging material comprises a tray and a lidding film sealed to the tray thus closing the package wherein the lidding film is a Biaxially Oriented Poly Ethylene (BOPE) or a Mono Directed Oriented Poly Ethylene (MDOPE)-containing polymer film polymer film.

## Patentansprüche

1. Verpackung zum Aufbewahren eines atmenden Produkts, das in der Verpackung aufgenommen ist, wobei die Verpackung ein Verpackungsvolumen definiert zum Aufnehmen eines Teils des Produkts und einer Verpackungsatmosphäre, aufweisend:
- ein Verpackungsmaterial, das eine Biaxial-Orientiertes-Polyethylen (BOPE)- oder eine Monodirektional-Orientiertes-Polyethylen(MDOPE)-enthaltende Polymerfolie mit einer Trübung von höchstens 10, vorzugsweise höchstens 5, noch bevorzugter höchstens 3 und am meisten bevorzugt höchstens 2, bestimmt nach ASTM D 1003, aufweist,
- wobei die Polymerfolie mit einer oder mehreren Perforationen versehen ist, die einen Gasaustausch mit der die Verpackung umgebenden Atmosphäre ermöglichen, um die Verpackung zu einer Kontrollierte-Atmosphäre-Verpackung (CAP) auszubilden, wobei:
- die Verpackung eine Verpackung-Kohlendioxid-Durchlässigkeitsrate (CO₂TR_{pack}) hat,
- wobei die eine oder mehreren Perforationen eine Perforation-Kohlendioxid-Durchlässigkeitsrate (CO₂TR_{perf}) bereitstellen, so dass die Verpackung-Kohlendioxid-Durchlässigkeitsrate (CO₂TR_{pack}) die Summe aus der Perforation-Kohlendioxid-Durchlässigkeitsrate (CO₂TR_{perf}) und der Material-Kohlendioxid-Durchlässigkeitsrate (CO₂TRₘₐₜ) des Verpackungsmaterials ist (CO₂TR_{pack} = CO₂TR_{perf} + CO₂TRₘₐₜ), und wobei
- die CO₂TR_{pack} mindestens 1000 ml/24 h pro 100 Gramm zu verpackendem Produkt, vorzugsweise mindestens 1500 ml/24 h, noch bevorzugter mindestens 2000 ml/24 h, am meisten bevorzugt mindestens 2500 ml/24 h, beträgt.

2. Verpackung nach dem vorstehenden Anspruch 1, wobei das zu verpackende Produkt aus frisch geschnittenem Blattgemüse, frisch geschnittenem Gemüse, Obst, Kräutern, Blumen oder zubereiteten Salaten ausgewählt ist.

3. Verpackung nach irgendeinem der vorstehenden Ansprüche, wobei das frisch geschnittene Blattgemüse Kopfsalat, Rucola, Spinat, Römersalat und Kombinationen davon aufweist.

4. Verpackung nach irgendeinem der vorstehenden Ansprüche, wobei das frisch geschnittene Gemüse grüne Bohnen, Zucchini, Karotten, Sprossen, Lauch, Blumenkohl, Brokkoli und Kombinationen davon aufweist.

5. Verpackung nach irgendeinem der vorstehenden Ansprüche, wobei das frische Obst Beeren, Äpfel, Birnen, Tomaten, Paprika, Bananen, Steinobst wie Mangos, und Kombinationen davon aufweist.

6. Verpackung nach irgendeinem der vorstehenden Ansprüche, wobei der zubereitete Salat frisch geschnittenes Blattgemüse und/oder frisch geschnittenes Gemüse und/oder frisches Obst aufweist.

7. Verpackung nach irgendeinem der vorstehenden Ansprüche, wobei die Dicke der Polymerfolienlage im Bereich von 5-200 Mikrometern, vorzugsweise im Bereich von 10-150 Mikrometern, bevorzugter im Bereich von 15-100 Mikrometern, noch bevorzugter im Bereich von 20-75 Mikrometern und am meisten bevorzugt im Bereich von 15-50 Mikrometern liegt.

8. Verpackung nach irgendeinem der vorstehenden Ansprüche, wobei das Verpackungsmaterial eine Material-Sauerstoff-Durchlässigkeitsrate (O₂TR_{pack}) und eine Perforation-Sauerstoff-Durchlässigkeitsrate (O₂TR_{perf}) hat, wobei die Verpackung-Sauerstoff-Durchlässigkeitsrate (O₂TR_{pack}) die Summe aus der Perforation-Sauerstoff-Durchlässigkeitsrate (O₂TR_{perf}) und der Material-Sauerstoff-Durchlässigkeitsrate (O₂TRₘₐₜ) des Verpackungsmaterials (O₂TR_{pack} = O₂TR_{perf} + O₂TRₘₐₜ) ist und das Verpackung-Durchlässigkeitsverhältnis β_{pack} β_{pack} = (CO₂TR_{perf} + CO₂TRₘₐₜ) / (O₂TR_{perf} + O₂T_{perf}) ist, wobei das Verpackung-Durchlässigkeitsverhältnis β_{pack} = CO₂TR_{pack} / O₂TR_{pack} mindestens 1,5, vorzugsweise mindestens 2, noch bevorzugter mindestens 3, noch bevorzugter mindestens 4, beispielsweise 5 oder mehr beträgt.

9. Verpackung nach irgendeinem der vorstehenden Ansprüche, wobei das Verpackungsmaterial eine Sauerstoff-Durchlässigkeitsrate (O₂TRₘₐₜ) von mindestens 2000 ml/(m².24 h), vorzugsweise mindestens 3000 ml/(m².24 h), noch bevorzugter mindestens 4000 ml/(m².24 h), am meisten bevorzugt mindestens 5000 ml/(m².24 h) hat.

10. Verpackung nach irgendeinem der vorstehenden Ansprüche, wobei das Verpackungsmaterial eine Kohlendioxid-Durchlässigkeitsrate (CO₂TRₘₐₜ) von mindestens 15000 ml/(m².24 h), vorzugsweise mindestens 20000 ml/(m².24 h), noch bevorzugter mindestens 25000, am meisten bevorzugt mindestens 30000 ml/(m².24 h) hat.

11. Verpackung zum Aufbewahren eines atmenden Produkts, das in der Verpackung aufgenommen ist, gemäß irgendeinem der vorstehenden Ansprüche, wobei das Verpackungsmaterial eine Schale und eine mit der Schale versiegelte Deckfolie aufweist, wodurch die Verpackung verschlossen ist, wobei die Deckfolie eine Biaxial-Orientiertes-Polyethylen (BOPE)- oder eine Monodirekt-Orientiertes-Polyethylen (MDOPE)-enthaltende Polymerfolie Polymerfolie ist.

12. Verfahren zum Herstellen einer Verpackung zum Aufbewahren eines atmenden Produkts, das in der Verpackung aufgenommen ist, aufweisend:
i. Bereitstellen einer geschlossenen Verpackung, die ein Verpackungsvolumen definiert zum Aufnehmen in dem Verpackungsvolumen eines Teils des atmenden Produkts, aus einem Verpackungsmaterial, das eine Biaxial-Orientiertes-Polyethylen (BOPE)- oder eine Monodirektional-Orientiertes-Polyethylen (MDOPE)-enthaltende Polymerfolie mit einer Trübung von höchstens 10, vorzugsweise höchstens 5, noch bevorzugter höchstens 3 und am meisten bevorzugt höchstens 2, bestimmt nach ASTM D 1003, aufweist, und
ii. Bestimmen einer Größe und gegebenenfalls einer Anzahl von einer oder mehreren Perforationen (3), die in dem Verpackungsmaterial vorgesehen sind oder vorzusehen sind, um einen Gasaustausch zwischen der Verpackungsatmosphäre und der die Verpackung umgebenden Atmosphäre zu ermöglichen, um die Verpackung zu einer Kontrollierte-Atmosphäre-Verpackung (CAP) auszubilden, so dass die Verpackung eine Verpackung-Kohlendioxid-Durchlässigkeitsrate (CO₂TR_{pack}) hat, die mindestens 1000 ml/24 h pro 100 Gramm zu verpackendes Produkt, vorzugsweise mindestens 1500 ml/24 h, noch bevorzugter mindestens 2000 ml/24 h, am meisten bevorzugt mindestens 2500 ml/24 h, beträgt.

13. Verfahren nach Anspruch 12, wobei das Verpackungsmaterial eine Kohlendioxid-Durchlässigkeitsrate (CO₂TR) von mindestens 10000 ml/(m².24 h), vorzugsweise mindestens 12000 ml/(m².24 h), noch bevorzugter mindestens 15000, am meisten bevorzugt mindestens 20000 ml/(m².24 h) hat.

14. Verfahren nach irgendeinem der vorstehenden Ansprüche 12-13, wobei das Verpackungsmaterial eine Sauerstoff-Durchlässigkeitsrate (O₂TR) von mindestens 2000 ml/(m².24 h), vorzugsweise mindestens 3000 ml/(m².24 h), bevorzugter mindestens 4000 ml/(m²,24 h), am meisten bevorzugt mindestens 5000 ml/(m², 24 h) hat.

15. Verfahren zum Herstellen einer Verpackung zum Verpacken zum Aufbewahren eines atmenden Produkts, das in der Verpackung aufgenommen ist, nach irgendeinem der vorstehenden Ansprüche 12-14, wobei das Verpackungsmaterial eine Schale und eine mit der Schale versiegelte Deckfolie aufweist, wodurch die Verpackung verschlossen ist, wobei die Deckfolie eine Biaxial-Orientiertes-Polyethylen (BOPE)- oder eine Monodirekt-Orientiertes-Polyethylen (MDOPE)-enthaltende Polymerfolie Polymerfolie ist.

## Revendications

1. Emballage pour la conservation de produits respirants contenus dans l'emballage dans lequel l'emballage définit un volume d'emballage pour contenir une partie des produits et une atmosphère d'emballage, qui comprend :
- un matériau d'emballage qui comprend un film polymère contenant du polyéthylène biorienté (BOPE) ou du polyéthylène mono-orienté (MDOPE) avec un trouble d'au maximum 10, de préférence d'au maximum 5, de manière davantage préférée d'au maximum 3, et de manière préférée entre toutes d'au maximum 2, comme déterminé par ASTM D1003,
- ledit film polymère étant doté d'une ou de plusieurs perforations permettant un échange gazeux avec l'atmosphère entourant l'emballage pour faire de l'emballage un emballage à atmosphère contrôlée (CAP) ; dans lequel :
- l'emballage a un taux de transmission de dioxyde de carbone d'emballage (CO₂TR_{pack})
- dans lequel les une ou plusieurs perforations fournissent un taux de transmission de dioxyde de carbone de perforation (CO₂TR_{perf}) de sorte que le taux de transmission de dioxyde de carbone d'emballage (CO₂TR_{pack}) soit la somme du taux de transmission de dioxyde de carbone de perforation (CO₂TR_{perf}) et du taux de transmission de dioxyde de carbone de matériau (CO₂TRₘₐₜ) du matériau d'emballage (CO₂TR_{pack} = CO₂TR_{perf} + CO₂TRₘₐₜ) et dans lequel
- le CO₂TR_{pack} est d'au moins 1000 ml/24 h pour 100 grammes de produits à emballer, de préférence d'au moins 1500 ml/24 h, de manière davantage préférée d'au moins 2000 ml/24 h, de manière préférée entre toutes d'au moins 2500 ml/24 h.

2. Emballage selon la revendication 1 précédente dans lequel les produits à emballer sont choisis parmi des légumes-feuilles fraîchement coupés, des légumes fraîchement coupés, des fruits, des herbes, des fleurs ou des salades préparées.

3. Emballage selon l'une quelconque des revendications précédentes dans lequel les légumes-feuilles fraîchement coupés comprennent de la laitue, de la roquette, des épinards, de la romaine et des combinaisons de ceux-ci.

4. Emballage selon l'une quelconque des revendications précédentes dans lequel les légumes fraîchement coupés comprennent des haricots verts, des courgettes, des carottes, des choux de Bruxelles, des fuites, des chouxfleurs, des brocolis et des combinaisons de ceux-ci.

5. Emballage selon l'une quelconque des revendications précédentes dans lequel les fruits frais comprennent des baies, des pommes, des poires, des tomates, des poivrons, des bananes, des fruits à noyau tels que des mangues et des combinaisons de ceux-ci.

6. Emballage selon l'une quelconque des revendications précédentes dans lequel la salade préparée comprend des légumes-feuilles fraîchement coupés et/ou des légumes fraîchement coupés et/ou des fruits frais.

7. Emballage selon l'une quelconque des revendications précédentes dans lequel l'épaisseur de la couche de film polymère est dans la plage de 5 à 200 micromètres, de préférence dans une plage de 10 à 150 micromètres, de manière davantage préférée dans une plage de 15 à 100 micromètres, de manière encore davantage préférée dans une plage de 20 à 75 micromètres, de manière préférée entre toutes dans la plage de 15 à 50 micromètres.

8. Emballage selon l'une quelconque des revendications précédentes dans lequel le matériau d'emballage a un taux de transmission d'oxygène de matériau (O₂TR_{pack}) et un taux de transmission d'oxygène de perforation (O₂TR_{perf}), et le taux de transmission d'oxygène d'emballage (O₂TR_{pack}) est la somme du taux de transmission d'oxygène de perforation (O₂TR_{perf}) et du taux de transmission d'oxygène de matériau (O₂TRₘₐₜ) du matériau d'emballage (O₂TR_{pack} = O₂TR_{perf} + O₂TRₘₐₜ) et le taux de transmission d'emballage β_{pack} est β_{pack} = (CO₂TR_{perf} + CO₂TRₘₐₜ) / (O₂TR_{perf} + O₂TRₘₐₜ), dans lequel le taux de transmission d'emballage β_{pack} = CO₂TR_{pack} / O₂TR_{pack} d'au moins 1,5, de préférence d'au moins 2, de manière davantage préférée d'au moins 3, de manière encore davantage préférée d'au moins 4, par exemple de 5 ou plus.

9. Emballage selon l'une quelconque des revendications précédentes, dans lequel le matériau d'emballage a un taux de transmission d'oxygène (O₂TRₘₐₜ) d'au moins 2000 ml/(m².24 h), de préférence d'au moins 3000 ml/(m².24 h), de manière davantage préférée d'au moins 4000 ml/(m².24 h), de manière préférée entre toutes d'au moins 5000 ml/(m².24 h).

10. Emballage selon l'une quelconque des revendications précédentes, dans lequel le matériau d'emballage a un taux de transmission de dioxyde de carbone (CO₂TRₘₐₜ) d'au moins 15 000 ml/(m².24 h), de préférence d'au moins 20 000 ml/(m².24 h), de manière davantage préférée d'au moins 25 000, de manière préférée entre toutes d'au moins 30 000 ml/(m².24 h).

11. Emballage pour la conservation de produits respirants contenus dans l'emballage selon l'une quelconque des revendications précédentes dans lequel le matériau d'emballage comprend un plateau et un film d'operculage scellé sur le plateau fermant ainsi l'emballage dans lequel le film d'operculage est un film polymère de film polymère contenant du polyéthylène biorienté (BOPE) ou du polyéthylène mono-orienté (MDOPE).

12. Procédé pour fabriquer un emballage pour la conservation de produits respirants contenus dans l'emballage comprenant :
i. la fourniture d'un emballage fermé définissant un volume d'emballage pour contenir dans le volume d'emballage une partie des produits respirants à partir d'un matériau d'emballage comprenant un film polymère contenant du polyéthylène biorienté (BOPE) ou du polyéthylène mono-orienté (MDOPE) avec un trouble d'au maximum 10, de préférence d'au maximum 5, de manière davantage préférée d'au maximum 3, et de manière préférée entre toutes d'au maximum 2, comme déterminé par ASTM D1003 ; et
ii. la détermination d'une taille, et éventuellement d'un nombre d'une ou plusieurs perforations (3) fournies dans ou devant être fournies dans le matériau d'emballage pour permettre un échange gazeux entre l'atmosphère d'emballage et l'atmosphère entourant l'emballage pour faire de l'emballage un emballage à atmosphère contrôlée (CAP), de sorte que l'emballage ait un taux de transmission de dioxyde de carbone d'emballage (CO₂TR_{pack}) qui est d'au moins 1000 ml/24 h pour 100 grammes de produits à emballer, de préférence d'au moins 1500 ml/24 h, de manière davantage préférée d'au moins 2000 ml/24 h, de manière préférée entre toutes d'au moins 2500 ml/24 h.

13. Procédé selon la revendication 12, dans lequel le matériau d'emballage a un taux de transmission de dioxyde de carbone (CO₂TR) d'au moins 10 000 ml/(m².24 h), de préférence d'au moins 12 000 ml/(m².24 h), de manière davantage préférée d'au moins 15 000, de manière préférée entre toutes d'au moins 20 000 ml/(m².24 h).

14. Procédé selon l'une quelconque des revendications 12 à 13 précédentes, dans lequel le matériau d'emballage a un taux de transmission d'oxygène (O₂TR) d'au moins 2000 ml/(m².24 h), de préférence d'au moins 3000 ml/(m².24 h), de manière davantage préférée d'au moins 4000 ml/(m².24 h), de manière préférée entre toutes d'au moins 5000 ml/(m².24 h).

15. Procédé de fabrication d'un emballage pour l'emballage pour la conservation de produits respirants contenus dans l'emballage selon l'une quelconque des revendications 12 à 14 précédentes dans lequel le matériau d'emballage comprend un plateau et un film d'operculage scellé sur le plateau fermant ainsi l'emballage dans lequel le film d'operculage est un film polymère de film polymère contenant du polyéthylène biorienté (BOPE) ou du polyéthylène mono-orienté (MDOPE).
